(19) Europäisches Patentamt / European Patent Office / Office européen des brevets

(11) **EP 2 679 983 A1**

(12) **EUROPEAN PATENT APPLICATION**

(43) Date of publication:
**01.01.2014 Bulletin 2014/01**

(51) Int Cl.:
*G01N 21/31* (2006.01)　*G01N 21/33* (2006.01)

(21) Application number: **12174510.3**

(22) Date of filing: **29.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **University College Cork
Cork City (IE)**

(72) Inventors:
• **Venables, Dean
  Cork, Carrigrohane (IE)**
• **Darby, Steven
  Spean Bridge, Highland Altour Road (GB)**

(74) Representative: **Purdylucey Intellectual Property
6-7 Harcourt Terrace
Dublin 2 (IE)**

(54) **A method and apparatus for quantification of gaseous elemental mercury in a gaseous sample**

(57) A method for quantification of gaseous elemental mercury in a gaseous sample using light absorption comprises the steps of passing light through the gaseous sample, detecting absorption of light by the gaseous sample at two distinct or different wavelength regions across the 254nm absorption band of mercury, determining a function of the differential absorption between the two distinct wavelength regions, and correlating the function of the differential absorption with concentration of gaseous elemental mercury. Differentiation of the absorption at the two wavelength regions may be accomplished in several ways, for example: by using isotopically distinct light sources and distinguishing their intensities (e.g., at different times); or by spectral filtering of a narrow mercury emission line after it traverses a sample.

Fig. 3

**Description**

**Background to the Invention**

Absorption of light is one of the main methods for analysing mercury. Three basic components are required for absorption measurements: a light source, a sample cell, and a detector. Absorption of light by the analyte is registered as a decrease in the intensity of light transmitted through the sample cell when the analyte is present. The concentration of the analyte is related to the magnitude of absorption.

Mercury is one of the few elements occurring in the gas phase; compared to gas phase molecules, it has an exceptionally strong and narrow absorption line, which occurs at 254 nm in the deep-ultraviolet. Unfortunately, other major trace gases such as ozone, sulfur dioxide, and aromatic compounds also absorb at this wavelength (and aerosols also scatter and absorb light), making it difficult to reliably attribute an observed absorption solely to mercury. Furthermore, the sensitivity of absorption measurements is reduced by variations in the output of the mercury line source (usually a low pressure mercury fluorescence lamp or a mercury electrodeless discharge lamp).

European Patent Application No: 2282193A1 discloses an atomic absorption mercury analyzer based on differential absorption that employs a magnetic field to split the atomic emission lines according to the Zeeman effect. As a result there are three emission lines, only one of which interacts with the mercury in the sample. Discrimination between the lines is based on modulating the polarization of the lines, and from this modulation and the resulting polarization, the wavelengths transmitted through the cell modulate between "on" absorption and "off" absorption wavelengths. The device disclosed in EP2282193A1 is complicated and expensive to manufacture.

It is an object of the invention to overcome at least one of the above-referenced problems.

**Statements of Invention**

The invention is based on the differential absorption across the 254nm absorption band of mercury. Naturally-occurring mercury is comprised of several isotopes ($^{198}$Hg, 10.1%; $^{199}$Hg, 16.9%; $^{200}$Hg, 23.1%; $^{201}$Hg, 13.2%; $^{202}$Hg, 29.9%; $^{204}$Hg, 6.9%), each of which gives rise to one or more absorption lines around 254 nm. At ambient pressures, the resulting absorption profile of naturally-occurring mercury has a shape reflecting the relative abundance of the constituent isotopes and the positions of their absorption lines. It is then possible to quantify the mercury concentration from the ratio of absorption at two wavelengths in the mercury absorption band, where the absorption at one wavelength is stronger than at another. The advantage of using the absorption ratio is that it is highly sensitive to mercury concentrations, but is little affected by other gases because the absorption of these gases does not change appreciably across the spectrally narrow absorption line of mercury. The approach thus provides superb specificity to mercury, even in complex chemical environments such as emission stacks.

Differentiation of the absorption at the two wavelength regions may be accomplished in several ways, for example: (1) by using isotopically distinct light sources and distinguishing their intensities (e.g., at different times); or (2) by spectral filtering of a narrow mercury emission line after it traverses a sample. In the latter case, an atomic filter containing isotopically-enriched mercury is used to remove selected spectral components of the transmitted light, based on the strong absorption of the mercury vapour. Detection may be accomplished in either transmission (where the mercury filter functions as an extremely narrow band-rejection filter) or in emission (where fluorescence from the atomic line filter is measured) mode. The ratio of two measured intensities (using either a second isotopic atomic line filter, or comparison to the unfiltered intensity) is then related to the differential absorption of mercury in the sample, and it is this differential absorption which forms the basis on which the mercury in the sample is quantified.

The invention is commercially attractive for monitoring relatively high mercury emissions, such as in continuous emission monitoring (CEM) of power plant and industrial emissions. Such regulatory monitoring requires expensive instrumentation and imposes a significant cost on such industries. The method and devices based on it are expected to be significantly lower in cost and require less maintenance, than other methods. Potentially, the approach could also be applied to open-path monitoring of mercury in the atmosphere, with applications in air quality monitoring and industrial fence-line monitoring.

Accordingly, in a first aspect, the invention provides a method for analysis (for example detection, identification or quantification) of gaseous elemental mercury in a gaseous sample using light absorption or fluorescence, which method comprises the steps of passing light through the gaseous sample and detecting the transmitted intensities or fluorescence at two wavelengths regions across the 254nm absorption band of mercury, and determining the differential absorption between the two wavelength regions. The differential absorption at the two wavelength regions is determined using either isotope-ratio distinct mercury emission as the light source, or an atomic line filter or filters based on isotope-ratio distinct mercury. The differential absorption correlates with a characteristic of gaseous elemental mercury, generally the concentration of gaseous elemental mercury in the sample. Ideally, the function of the differential absorption/fluorescence intensities at the two wavelengths is a ratio of the two intensities.

Thus, the method of the invention employs differential absorption as a means of greatly reducing the influence of interferences from molecular absorption or aerosol extinction.

The term "two wavelengths regions across the 254nm absorption band of mercury" refers to different or distinct wavelength regions within or overlapping the 254nm absorption band of mercury.

In this specification, the term "gaseous elemental mercury" should be understood to mean mercury atoms in the gas phase, usually (but not necessarily) in their natural isotopic abundances.

In one embodiment, the step of detecting absorption at two wavelength regions across the 254nm absorption band of mercury comprises the steps of passing light from two isotope-ratio distinct mercury light sources through the gaseous sample, and detecting absorption of light from each source by the gaseous sample.

In this specification, the term "two isotope-ratio distinct mercury light sources" should be understood to mean mercury light sources, for example mercury lamps (e.g., in a low vapour mercury lamp or an electrodeless discharge lamp), that have different ratios of mercury isotopes. Thus, for example, the first light source may be a mercury lamp enriched with a first mercury isotope and the second light source may be a mercury lamp enriched with a second mercury isotope. Alternatively, the first light source may be an isotope-enriched mercury lamp and the second light source may be a mercury lamp that is not enriched in any mercury isotope.

In a different embodiment, but applying the same principle, the step of detecting absorption at two wavelength regions across the 254nm absorption band of mercury comprises the step of passing a first portion of the light through an atomic filter containing mercury having a first isotope ratio, wherein a second portion of the light is either unfiltered or filtered through an atomic filter containing mercury having an isotope ratio that is different to the first isotope ratio.

Thus, the two atomic filters (when two are employed) comprise mercury having different isotope ratios. Thus, the first filter may comprise a first mercury isotope (or mercury enriched in a first mercury isotope), and the second filter may comprise a second mercury isotope (or mercury enriched in a first mercury isotope).

Detection may be accomplished in either transmission (where the mercury filter functions as an extremely narrow band-rejection filter) or in emission (where fluorescence from the atomic line filter is measured) mode. The ratio of two measured intensities (using either the second isotopic atomic line filter, or comparison to the unfiltered intensity) is then related to the differential absorption of mercury, and it is this differential absorption which forms the basis on which the mercury in the sample is quantified.

In this embodiment, a light source is employed that emits narrowband light spanning (or partially spanning) the 254nm absorption band of mercury. Suitable commercially-available light sources include low vapour pressure mercury lamps and mercury electrodeless discharge lamps using mercury at its natural abundance.

In this specification, the term "mercury isotope" should be understood to mean $^{198}$Hg, $^{199}$Hg, $^{200}$Hg, $^{201}$Hg, $^{202}$Hg, or $^{204}$Hg. Preferably, the term "enriched" should be taken to mean that the mercury sample comprises at least 50% (w/w) of the particular isotope that the mercury sample is enriched in.

In a second aspect, the invention provides an apparatus typically suitable for carrying out the method of the invention for analysis, ideally quantification, of gaseous elemental mercury in a gaseous sample.

In one embodiment, the apparatus comprises:

- a light source;
- an analytical cell for the gaseous sample; and
- a detector configured to detect absorption of light transmitted through the cell,

**characterised in that** the apparatus comprises a first atomic filter comprising mercury having a first isotope ratio, optionally a second atomic filter comprising mercury having an isotope ratio different to the first isotope ratio, and means for splitting light from the light source into a first signal that is passed through the first atomic filter, and a second signal that is unfiltered or is passed through the second atomic filter.

In this specification, the term "analytical cell" refers to a space, generally but not exclusively an enclosed space, within which a gaseous sample may be analysed. Thus, in one embodiment, the cell may comprise an enclosed space with an inlet and outlet, and walls that allow transmission of light. In another embodiment, the analytical cell may comprise a space between the light source and the detector; this embodiment is suited for analysis of gases out in the open.

Preferably, the first signal is passed through the first atomic filter and the second signal is passed through the second atomic filter.

Typically, the detector comprises a first detector configured for measuring the intensity of light filtered through the first atomic filter, and a second detector configured for measuring the intensity of light filtered through the second atomic filter.

Suitably, the first and second detectors are configured for detection of transmitted light through, or fluorescence from, the atomic filters.

Suitably, the detector comprises a photo-detector suitably adapted to detect transmitted light, the details of which will be known to those skilled in the art. In another embodiment, the detector is adapted to detect fluorescence.

Examples of photodetectors include photomultiplier tubes and photodiodes.

In one embodiment, the apparatus is configured such that light passes through the analytical cell prior to passing through  the or each atomic filter. In another embodiment, the apparatus is configured such that light passes through the or each atomic filter before passing through the analytical cell.

Preferably, the apparatus comprises a processor means adapted to receive intensity or fluorescence data from the two detectors, calculate a value for differential absorption based on the intensity or fluorescence data, and correlate the value for differential absorption with concentration of mercury in the sample. Ideally, the processor comprises a display module for displaying a content based in part on the intensity data, the fluorescence data, differential absorption data, or mercury concentration data. The display module may be a monitor or a printed read-out.

In a second embodiment, the apparatus comprises:

- first and second isotope-ratio distinct mercury light sources;
- an optional analytical cell for the gaseous sample disposed in the light path of each of the first and second isotopically distinct light sources; and
- detector means configured to determine the intensity of the light from the first light source that is transmitted through the analytical cell and to separately determine the intensity of the light from the second light source that is transmitted through the analytical cell.

Typically, the detector means comprises:

- a first detector configured to determine the intensity of the light from the first light source transmitted through the analytical cell; and
- a second detector configured to determine the intensity of the light from the second light source transmitted through the analytical cell.

Alternatively, a single detector may be provided that is configured to distinguish the intensities from the two light sources, for example, by switching from one light source to another or by modulating the light sources at different frequencies.

Suitably, the first and second isotope-ratio distinct mercury light sources comprises a first mercury lamp enriched in a first mercury isotope and a second mercury lamp enriched in a second mercury isotope..

Preferably, the apparatus further comprises a processor means adapted to receive intensity or fluorescence data from the two detectors, calculate a value for differential absorption based on the intensity or fluorescence data, and correlate the value for differential absorption with concentration of mercury in the sample. Ideally, the processor comprises a display module for displaying a content based in part on the intensity data, the fluorescence data, differential absorption data, or mercury concentration data. The display module may be a monitor or a printed read-out.

## Brief Description of the Figures

The invention will be more clearly understood from the following description of some embodiment thereof, given by way of example only, with reference to the accompanying Figures in which:

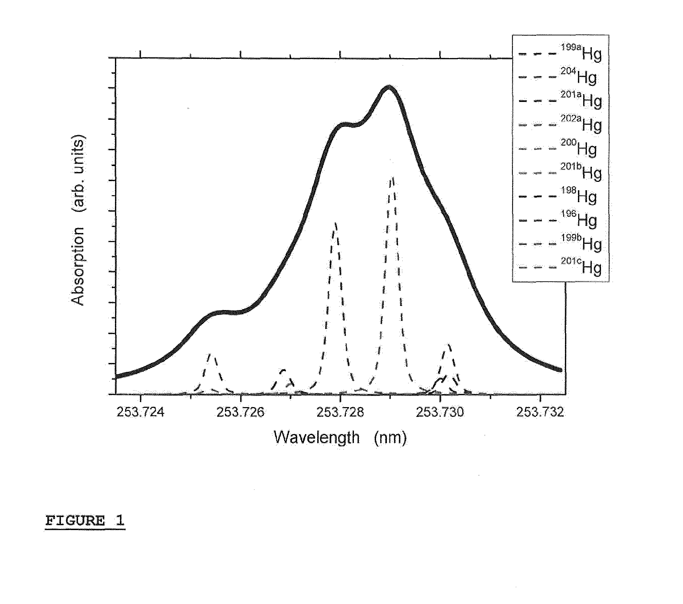

Figure 1: Mercury absorption spectrum - the absorption spectrum of mercury and its isotopes at a temperature of 300 K. The absorption band of natural abundance mercury at a pressure of 100 kPa is shown by the thick black line, while the absorption lines of each isotope at a pressure of 10 kPa  are shown as dashed lines. (Nuclear spin splitting of the absorption lines of odd-numbered isotopes are labelled "a", "b", "c" in the legend.) Emission intensity profiles have a similar shape.

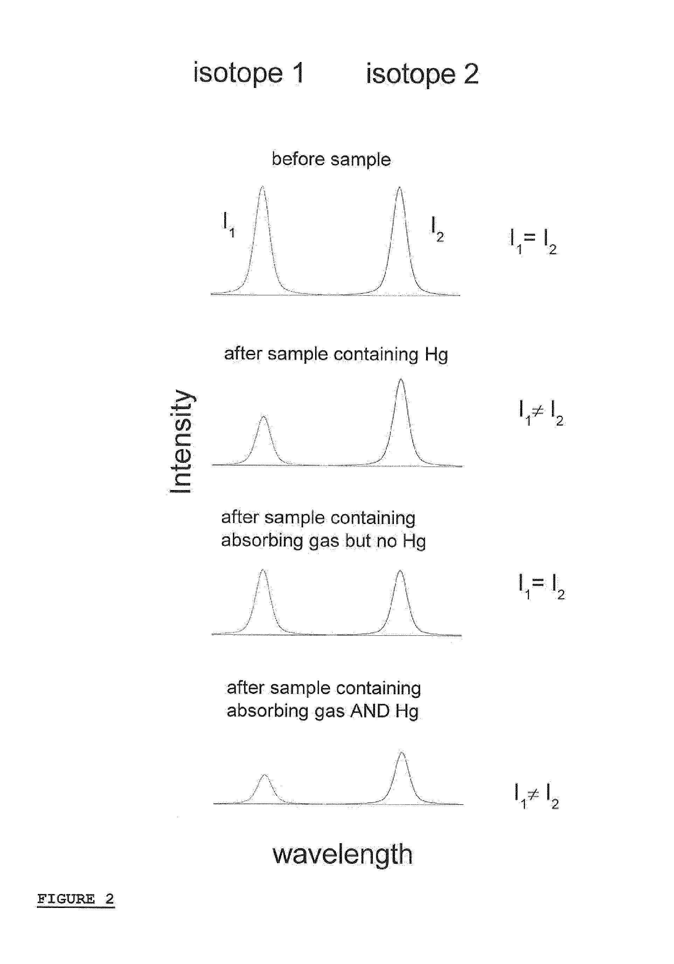

Figure 2: Differential absorption scheme - showing changes to light intensity at two wavelengths defined by the absorption/emission profiles of two mercury isotopes. For clarity of illustration, initial intensities $I_1$ and $I_2$ (that is, the intensities before the sample) are assumed to be equal. The cases shown are where the sample contains mercury but no other absorbing molecules, where other absorbing molecules besides mercury are present, and where mercury and other absorbing molecules are both present. The ratio of the two intensities indicates whether mercury is present ($I_1/I_2 < 1.0$) or whether mercury is absent ($I_1/I_2 = 1.0$), and is related to the concentration of mercury in the sample.

Figure 3 is an illustration of an apparatus suitable for quantification of gaseous elemental mercury in a gaseous sample according to the invention.

Figure 4 is an illustration of an apparatus suitable for quantification of gaseous elemental mercury in a gaseous sample according to an alternative embodiment of the invention.

Figure 5 is an illustration of an apparatus suitable for quantification of gaseous elemental mercury in a gaseous sample according to a further alternative embodiment of the invention.

**Detailed Description of the Invention**

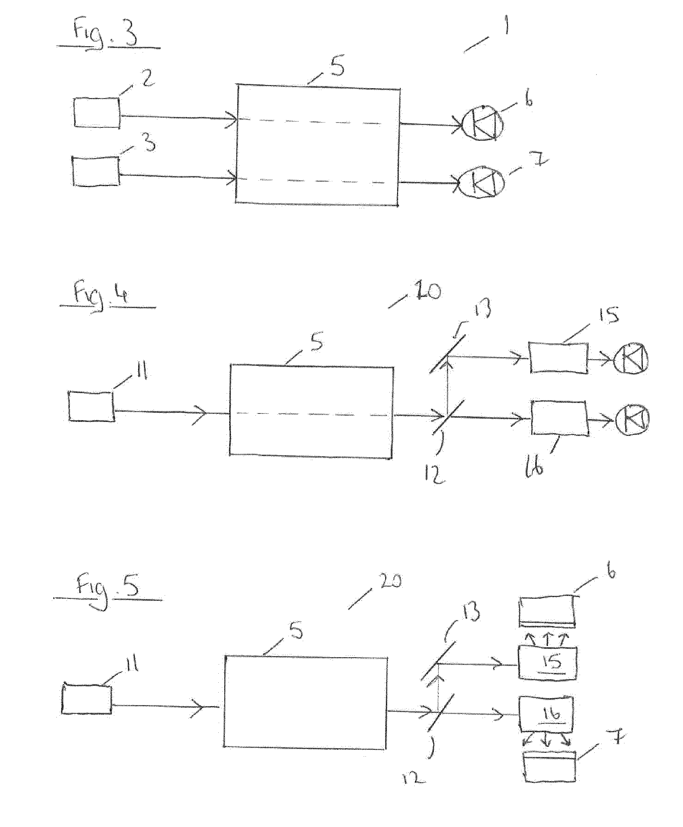

Referring to the drawings, and initially to Figure 3, there is illustrated an apparatus for use in quantification of gaseaous elemental mercury according to the invention, and indicated generally by the reference numeral 1. The apparatus 1 comprises a first isotopically distinct mercury light source 2 comprising a $^{200}$Hg (for example) mercury lamp, a second isotopically distinct mercury light source 3 comprising a $^{202}$Hg (for example) mercury lamp, an analytical cell 5, and a pair of photodetectors 6, 7 adapted to determine the intensity of light from the light sources 2, 3 that is transmitted through the samples. The analytical cell must transmit 254 nm light and could be either open or closed path, but its optical configuration is flexible: it could be a single pass, multipass, or an optical cavity. In use, light emitted by the two light sources is transmitted through a gaseous sample contained within the analytical cell once or multiple times, and the intensity of the transmitted light is determined by the photodetector/s. The ratio of two measured intensities is then related to the differential absorption of mercury, and it is this differential absorption which forms the basis on which the mercury in the sample is quantified.

Referring to Figure 4, a further embodiment of the apparatus of the invention is described, indicated generally by the reference numeral 10, in which parts identical to those described with reference to the previous embodiment are assigned the same reference numerals. In this embodiment, the apparatus 10 comprises a single light source 11, in this case a low vapour pressure mercury lamp or an electrodeless discharge lamp with naturally (or possibly isotopically-enriched) mercury, an analytical cell 5 that in use contains the gaseous sample to be analysed, and an optical arrangement comprising a light splitter 12 adapted to split light transmitted through the analytic cell into two parts and a reflector 13. The apparatus additionally includes two atomic filters 15, 16, one of which contains an isotopically-enriched sample of mercury enriched in the $^{202}$Hg (for example) mercury isotope, and the other of which contains a sample of mercury enriched in another mercury isotope/s, for example, the $^{200}$Hg mercury isotope. A pair of photodetectors 6, 7 adapted to determine the intensity of light transmitted through the atomic filters. In use, light emitted by the light source is transmitted through a gaseous sample contained within the analytical cell, and the transmitted light is split into two paths using the optical arrangement. An atomic filter is disposed along the first light path and the second atomic filter is disposed along the second light path. The intensity of the two filtered light signals are then determined using the photodetectors. The ratio of two measured intensities is then related to the differential absorption of mercury, and it is this differential absorption which forms the basis on which the mercury in the sample is quantified.

Referring to Figure 5, a further embodiment of the apparatus of the invention is described, indicated generally by the reference numeral 20, in which parts identical to those described with reference to the previous embodiment are assigned the same reference numerals. In this embodiment, the apparatus is the same as that described with reference to Figure 4, with the exception that the detectors measure fluorescence intensity of emitted light, as opposed to intensity of transmitted light, from the atomic filters. Thus, the detectors comprise photomultiplier tubes 21 arranged in close proximity to the atomic filters.

Equations governing quantification based on differential absorption:

It is assumed that the light intensity transmitted through the sample obeys the Beer-Lambert law:

$$I_1 = I_{0,1} \exp(-N_{Hg}\sigma_1 d)$$

and

$$I_2 = I_{0,2} \exp(-N_{Hg}\sigma_2 d)$$

where $N_{Hg}$ is the concentration of gaseous elemental mercury (atoms cm$^{-3}$), d is the pathlength and, at wavelength i, $\sigma_i$ is the pressure-broadened absorption cross-section of mercury, and $I_{0,i}$ and $I_i$ are the intensities before and after traversing the sample.

For illustrative clarity, the intensities and absorption cross-sections are considered for two infinitely narrow wavelengths ($\lambda_1$ and $\lambda_2$); however, it is to be understood that in reality these quantities extend over a narrow range determined by temperature and pressure broadening of the line profiles, and that the overall emission spectrum from could include contributions from several isotopes.

If the intensities before the sample have a constant emission ratio, k, that is, $I_{0,1} = kI_{0,2}$, then the ratio of intensities after traversing the sample is:

$$\frac{I_1}{I_2} = \frac{I_{0,1}\exp(-N_{Hg}\sigma_1 d)}{I_{0,1}\exp(-N_{Hg}\sigma_1 d)} = k\exp[-N_{Hg}\sigma_1 d + N_{Hg}\sigma_2 d] = k\exp[-N_{Hg}d(\Delta\sigma)]$$

where $\Delta\sigma = \sigma_1 - \sigma_2$ is the differential absorption cross-section. The ratio $I_1/I_2$ is thus related to the concentration of mercury via this differential absorption cross-section.

Now consider an additional absorption or extinction process in the sample, $\varepsilon$, which could arise from gases such as $SO_2$, $O_3$, aromatics, or from absorbing or scattering of light by aerosols. If we assume that the spectral dependence is small between $\lambda_1$ and $\lambda_2$ (that is, that $\varepsilon_1 = \varepsilon_2 = \varepsilon$), then the intensities $I_i$ and their ratio are:

$$I_i = I_{0,i}\exp(-N_{Hg}\sigma_i d - \varepsilon d)$$

and

$$\frac{I_1}{I_2} = \frac{I_{0,1}\exp(-N_{Hg}\sigma_1 d - \varepsilon d)}{I_{0,1}\exp(-N_{Hg}\sigma_1 d - \varepsilon d)} = k\exp[-N_{Hg}d(\Delta\sigma)]$$

That is, the ratio of intensities is unaffected by the presence of another absorbing molecule or aerosol, and the concentration of mercury can be retrieved as before.

The invention is not limited to the embodiments hereinbefore described which may be varied in construction and detail without departing from the spirit of the invention.

## Claims

1.  A method for quantification of gaseous elemental mercury in a gaseous sample using light absorption, which method comprises the steps of passing light through the gaseous sample, detecting absorption of light by the gaseous sample at two distinct or different wavelength regions across the 254nm absorption band of mercury, determining a function of the differential absorption between the two distinct wavelength regions, and correlating the function of the differential absorption with concentration of gaseous elemental mercury.

2.  A method as claimed in Claim 1 in which the step of detecting absorption at two wavelength regions across the 254nm absorption band of mercury comprises the steps of passing light from two isotope-ratio distinct mercury light sources through the gaseous sample, and detecting absorption of light from each source by the gaseous sample.

3.  A method as claimed in Claim 2 in which the two isotope-ratio distinct mercury light sources comprise a first mercury lamp enriched in a first mercury isotope and a second mercury lamp enriched in a mercury isotope different to the first mercury isotope.

4.  A method as claimed in Claim 1 in which the step of detecting absorption at two wavelength regions across the 254nm absorption band of mercury comprises the step of passing a first portion of the light through an atomic filter containing mercury having a first isotope ratio, wherein a second portion of the light is either unfiltered or filtered through an atomic filter containing mercury having an isotope ratio that is different to the first isotope ratio.

5.  A method as claimed in Claim 1 in which the absorption of light is detected by measuring intensity of transmitted light or fluorescence.

6.  An apparatus suitable for carrying out the method of Claim 4, the apparatus comprising:

- a light source;
- an analytical cell for the gaseous sample; and
- a detector configured to detect absorption of light transmitted through the cell,
**characterised in that** the apparatus comprises a first atomic filter comprising mercury having a first isotope ratio, optionally a second atomic filter comprising mercury having an isotope ratio different to the first isotope ratio, and means for splitting light from the light source into a first signal that is passed through the first atomic filter, and a second signal that is unfiltered or is passed through the second atomic filter.

7. An apparatus as claimed in Claim 6 in which the first signal is passed through the first atomic filter and the second signal is passed through the second atomic filter.

8. An apparatus as claimed in Claim 6 or 7 comprising a first detector configured for measuring the intensity of light filtered through the first atomic filter, and a second detector configured for measuring the intensity of light filtered through the second atomic filter.

9. An apparatus as claimed in Claim 8 in which the first and second detectors are configured for detection of transmitted light through, or fluorescence from, the atomic filters.

10. An apparatus as claimed in any of Claims 6 to 9 configured such that light passes through the analytical cell prior to passing through the or each atomic filter.

11. An apparatus for carrying out the method of Claim 2, comprising:

- first and second isotope-ratio distinct mercury light sources;
- an optional analytical cell for the gaseous sample disposed in the light path of each of the first and second isotopically distinct light sources; and

- detector means configured to determine the intensity of the light from the first light source that is transmitted through the analytical cell and to separately determine the intensity of the light from the second light source that is transmitted through the analytical cell.

12. An apparatus as claimed in Claim 11 in which the detector means comprises:

- a first detector configured to determine the intensity of the light from the first light source transmitted through the analytical cell; and
- a second detector configured to determine the intensity of the light from the second light source transmitted through the analytical cell.

13. An apparatus as claimed in Claim 11 in which the detector means comprises a single detector adapted to distinguish the intensities from the two light sources.

14. An apparatus as claimed in Claim 11 in which first and second isotope-ratio distinct mercury light sources comprises a first mercury lamp enriched in a first mercury isotope and a second mercury lamp enriched in a second mercury isotope..

15. An apparatus as claimed in any of Claims 6 to 14 and further comprising a processor means adapted to receive intensity or fluorescence data from the two detectors, calculate a value for differential absorption based on the intensity or fluorescence data, and correlate the value for differential absorption with concentration of mercury in the sample.

FIGURE 1

isotope 1    isotope 2

before sample

$I_1$    $I_2$    $I_1 = I_2$

Intensity

after sample containing Hg

$I_1 \neq I_2$

after sample containing
absorbing gas but no Hg

$I_1 = I_2$

after sample containing
absorbing gas AND Hg

$I_1 \neq I_2$

wavelength

FIGURE 2

Fig. 3

Fig. 4

Fig. 5

Europäisches
Patentamt

European
Patent Office

Office européen
des brevets

## EUROPEAN SEARCH REPORT

Application Number

EP 12 17 4510

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 104 882 A (BARRINGER RESEARCH LTD) 6 March 1968 (1968-03-06) * figure 1 * * page 2, column 1, line 31 - page 3, column 1, line 35 * ----- | 1-15 | INV. G01N21/31 G01N21/33 |

TECHNICAL FIELDS
SEARCHED      (IPC)

G01N

The present search report has been drawn up for all claims

| Place of search | Date of completion of the search | Examiner |
|---|---|---|
| The Hague | 23 October 2012 | Rasmusson, Marcus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 17 4510

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| GB 1104882 | A | 06-03-1968 | GB | 1104882 A | 06-03-1968 |
| | | | SE | 324467 B | 01-06-1970 |

For more details about this annex : see Official Journal of the European Patent Office, No. 12/82

**EP 2 679 983 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2282193 A1